# EUROPÄISCHE PATENTSCHRIFT

(11) **EP 0 623 660 B1**
(45) Veröffentlichungstag und Bekanntmachung des Hinweises auf die Patenterteilung: **28.07.1999**
(21) Anmeldenummer: 94106219.2
(22) Anmeldetag: 21.04.1994
(51) Int. Cl.: C09D 167/06, C08G 63/676

(54) **Radikalisch härtbare Lackkomposition und ihre Verwendung als Möbellack**
Radically hardenable lacquer composition and its use for furniture lacquer
Composition de peinture durcissable radiacalement et son utilisation comme peinture pour meubles

(30) Priorität: 05.05.1993 DE 4314866
(43) Veröffentlichungstag der Anmeldung: 09.11.1994
(73) Patentinhaber: BAYER AG, 51368 Leverkusen (DE)
(72) Erfinder: Meixner, Jürgen, Dr., D-47803 Krefeld (DE); Fischer, Wolfgang, Dr., D-40668 Meerbusch (DE); Müller, Manfred, Dipl.-Ing., D-41812 Erkelenz (DE)

(56) Entgegenhaltungen:
- DE-A- 2 221 335
- DE-A- 3 900 257

## Beschreibung

Die Erfindung betrifft eine neue, radikalisch bei Temperaturen unterhalb 80°C härtbare Lackkomposition auf Basis von speziellen, olefinisch ungesättigten Polyesterharzen und ihre Verwendung als Möbellack.

Die in der Praxis für radikalisch aushärtbare Beschichtungen gebräuchlichen Bindemittel auf Basis ungesättigter Polyesterharze enthalten im allgemeinen Styrol als copolymerisierbares Monomer. Während der Verarbeitung verdunstet Styrol, das die kostspielige Reinigung der Luft der Fabrikationshallen und der Abluft der Trockenanlagen notwendig macht.

Styrolfreie, durch UV-Licht härtbare, ungesättigte Polyesterharze als Bindemittel für Beschichtungsmassen sind in der DE-AS 22 21 335 beschrieben. Sie werden jedoch in Schichtdicken von weniger als 50 µm eingesetzt. Höhere Schichtdicken verlängern die Trocknungszeit erheblich, besonders wenn die Lackfilme mittels Peroxiden gehärtet werden sollen.

Ähnlich aufgebaute, monomerenfreie, ungesättigte Polyesterharze sind aus der DE-OS 39 00 257 bekannt. Die Trockenzeit dieser Produkte, die als Bindemittel für Spachtelmassen diesen, ist jedoch bei Raumtemperatur zu lange, so daß sie unter Infrarotstrahlen gehärtet werden müssen.

Als Trocknungsbeschleuniger ist in styrolhaltigen Systemen oftmals Paraffin enthalten. Bei der radikalischen Aushärtung schwimmt dieses Paraffin aus und verhindert damit den störenden Einfluß des Luftsauerstoffs. Wie Versuche mit monomerenfreien Bindemitteln (z.B. nach DE-OS 39 00 257 hergestellten), denen Paraffin zugesetzt wurde, ergaben, besitzen entsprechende Lacke trotzdem sehr lange Trocknungszeiten. Nach der Aushärtung zeigen die entsprechenden Lackfilme sowohl schlechte Polierbarkeit als auch eine Oberfläche mit schlechtem Verlauf.

Aufgabe der vorliegenden Erfindung war es deshalb, eine neue Lackkomposition auf Basis von styrolfreien Polyesterharzen zur Herstellung von radikalisch härtbaren Überzügen zur Verfügung zu stellen, welche in kurzer Zeit zu harten, gut schleif- und polierbaren Oberflächen ohne Verlaufsstörungen führt.

Diese Aufgabe konnte mit der Bereitstellung der nachstehend näher beschriebenen, erfindungsgemäßen Lackkomposition gelöst werden.

Gegenstand der Erfindung ist eine radikalisch bei Temperaturen unterhalb 80°C härtbare Lackkomposition aus
A) 50 bis 95 Gew.-Teilen einer α,β-ethylenisch ungesättigten Polyesterkomponente, einer Viskosität bei 23°C von 1000 bis 15000 mPa.s, bestehend aus mindestens einem Polyesterharz, welches unter Einhaltung eines Äquivalentverhältnisses von Carboxylgruppen zu Hydroxylgruppen von höchstens 1:1 durch Umsetzung von
   a) einer Dicarbonsäurekomponente, bestehend zu 75 bis 100 Carboxyl-Äquivalent-% aus α,β-ethylenisch ungesättigten Dicarbonsäuren mit 4 oder 5 Kohlenstoffatomen und/oder deren Anhydriden und zu 0 bis 25 Carboxyl-Äquivalent-% aus anderen, dieser Definition nicht entsprechenden Dicarbonsäuren mit 4 bis 10 Kohlenstoffatomen oder deren Anhydriden, mit
   b) einer Alkoholkomponente, bestehend zu 15 bis 60 Hydroxyl-Äquivalent-% aus mindestens einem β,γ-ethylenisch ungesättigten Alkenylether-Alkohol mit 6 bis 14 Kohlenstoffatomen und zu 40 bis 85 Hydroxyl-Äquivalent-% aus anderen, dieser Definition nicht entsprechenden ein- und/oder zweiwertigen Alkoholen des Molekulargewichtsbereichs 32 bis 400
   hergestellt worden ist,
B) 5 bis 50 Gewichtsteilen (Meth)Acrylgruppen und/oder Vinylethergruppen enthaltender Verbindungen einer Viskosität bei 23°C von 10 bis 1000 mPa.s und des Molekulargewichtsbereichs 72 bis 1000,
wobei die Summe der Gewichtsteile A) und B) 100 beträgt,
C) 0,01 bis 0,3 Gew.-%, bezogen auf das Gesamtgewicht der Komponenten A) bis D), Wachse und/oder Paraffine mit einem Schmelzpunkt von 35 bis 100°C als Sperrmittel,
D) 0 bis 10 Gew.-%, bezogen auf das Gesamtgewicht der Komponenten A) bis D), mindestens eines Weichmacher- oder Carbamidsäureharzes,
   sowie gegebenenfalls
E) aus der Technologie der ungesättigten Polyesterharze bekannten weiteren Hilfs- und Zusatzstoffen.

Gegenstand der Erfindung ist auch die Verwendung dieser Lackkomposition als Möbellack.

Die Säurekomponente a) besteht zu 75 bis 100, vorzugsweise 90 bis 100 Carboxyl-Äquivalent-% aus α,β-ethylenisch ungesättigten Dicarbonsäuren mit 4 bis 5 Kohlenstoffatomen und/oder deren Anhydriden. Beispiele sind Fumarsäure, Itaconsäure, Itaconsäureanhydrid, Maleinsäure, Maleinsäureanhydrid oder beliebige Gemische dieser Säuren bzw. Anhydride. Bevorzugt sind Fumarsäure, Maleinsäure und/oder Maleinsäureanhydrid; besonders bevorzugt ist Fumarsäure.

Die Säurekomponente a) kann neben den beispielhaft genannten α,β-olefinisch ungesättigten Dicarbonsäuren bzw. deren Anhydride bis zu 25, vorzugsweise bis zu 10 Carboxyl-Äquivalent-% an anderen, der gemachten Definition nicht entsprechenden Dicarbonsäuren oder Dicarbonsäureanhydride enthalten. Hierzu gehören insbesondere gesättigte, aliphatische Dicarbonsäuren mit 4 bis 10 Kohlenstoffatomen wie beispielsweise Bernsteinsäure, Adipinsäure, Sebacinsäure und/oder die Anhydride derartiger Säuren, cycloaliphatische Dicarbonsäuren oder Dicarbonsäureanhydride mit 8 bis 10 Kohlenstoffatomen wie beispielsweise Norbornendicarbonsäure oder deren Anhydride und aromatische Dicarbonsäuren oder Dicarbonsäureanhydride mit 8 Kohlenstoffatomen wie beispielsweise Phthalsäure, Phthalsäureanhydrid, Isophthalsäure oder Terephthalsäure.

Die den Polyestern A) zugrundeliegende Alkoholkomponente b) besteht zu 15 bis 60 Hydroxyl-Äquivalent-% aus mindestens einem β,γ-ethylenisch ungesättigten Alkenyletheralkohol mit 6 bis 14 Kohlenstoffatomen und vorzugsweise einer Hydroxylgruppe pro Molekül. Hierzu gehören insbesondere die dieser Definition entsprechenden Allylether mehrwertiger Alkohole wie z.B. Trimethylolpropandiallylether, Glycerindiallylether oder Pentaerythrittriallylether, vorzugsweise Trimethylolpropandiallylether.

Die Alkoholkomponente b) besteht im übrigen, d.h. zu 40 bis 85 Hydroxyl-Äquivalent-% an anderen, dieser Definition nicht entsprechenden ein- oder mehrwertigen, vorzugsweise ein- oder zweiwertige Alkohole des Molekulargewichtsbereichs 32 bis 400. Beispiele hierfür sind Methanol, Ethanol, n-Hexanol, Isooctanol, Isododecanol, Benzylalkohol, Ethylenglykol, Diethylenglykol, Propylenglykol oder aus diesen einfachen Alkoholen durch Alkoxylierung erhaltene, den gemachten Angaben bezüglich der Anzahl der Kohlenstoffatome entsprechende, Ethergruppen aufweisende Alkohole. Die in Betracht kommenden zweiwertigen Alkohole weisen vorzugsweise 2 bis 6 Kohlenstoffatome, die in Betracht kommenden einwertigen Alkohole vorzugsweise 1 bis 12 Kohlenstoffatome auf.

Bei der Herstellung der Polyester A) kommen die Carboxylkomponente a) und die Alkoholkomponente b) in solchen Mengen zum Einsatz, die einem Äquivalentverhältnis von Carboxylgruppen zu Hydroxylgruppen von höchstens 1:1, vorzugsweise von 0,6:1 bis 1:1 entsprechen.

Die Herstellung der ungesättigten Polyester kann nach bekannten Methoden, z.B. durch Schmelzveresterung der Alkohole und Säuren oder deren veresterungsfähigen Derivate erfolgen, vgl. "Methoden der organischen Chemie" (Houben-Weyl), 4. Auflage, Bd. 14/2, Georg Thieme Verlag, Stuttgart 1961, S. 1-5, 21-33, 40-44.

Vorzugsweise erfolgt die Versterung unter Inertgasatmosphäre bei Temperaturen von 140 bis 190°C.

Die ungesättigten Polyester A) weisen Säurezahlen von 0 bis 50, vorzugsweise 5 bis 45, Hydroxylzahlen von 10 bis 150, vorzugsweise 10 bis 130 mg KOH/g auf. Das als Zahlenmittel mit Hilfe der Gelpermeationschromatographie unter Verwendung von Polystyrol als Standard ermittelte Molekulargewicht der Polyester A) liegt bei 300 bis 2000, vorzugsweise 400 bis 1500.

Um die ungesättigten Polyester A) vor unerwünschter vorzeitiger Vernetzung zu bewahren, empfiehlt es sich, bereits bei der Herstellung der Ester 0,001 bis 0,1 Gew.-% Polymerisationsinhibitoren oder Antioxidantien zuzusetzen. Geeignete Stabilisatoren sind in "Methoden der organischen Chemie" (Houben-Weyl), 4. Auflage, Bd. 14/1, S. 433 ff. Georg Thieme Verlag, Stuttgart 1961, beschrieben. Sehr gut geeignet ist z.B. Toluhydrochinon in einer Konzentration von 0,01 bis 0,05 Gew.-%, bezogen auf Polyester.

Bei der Komponente B) der erfindungsgemäßen Lackkomposition handelt es sich um (Meth)Acryloylgruppen und/oder Vinylethergruppen enthaltende Verbindungen der bereits oben genannten Kenndaten.

Geeignete Vinylethergruppen enthaltende Verbindungen sind vor allem pro Molekül eine oder zwei Vinylgruppen aufweisende Ether des Molekulargewichtsbereichs 72 bis 500 wie beispielsweise Vinylisobutylether, Hydroxybutylvinylether, Cyclohexylvinylether, 1,4-Butandiol-divinylether, Triethylenglykoldivinylether oder 1,4-Bishydroxymethyl-cyclohexan-divinylether.

Besonders geeignete (Meth)Acryloylgruppen enthaltende Verbindungen sind (Meth)Acrylatgruppen aufweisende Verbindungen des Molekulargewichtsbereichs 170 bis 1000 wie beispielsweise die (Meth)Acrylsäureester von Benzylalkohol, Ethylenglykol, 1,4-Butandiol, 1,6-Hexandiol, Glycerin, Trimethylolpropan, Pentaerythrit, Sorbit oder die entsprechenden (Meth)Acrylsäureester des genannten Molekulargewichtsbereichs der diesen Alkoholen entsprechenden Polyetheralkohole, wie sie in an sich bekannter Weise durch Alkoxylierung unter Verwendung von Propylenoxid und/oder Ethylenoxid der genannten Ethergruppen-freien Alkohole erhalten werden können.

Das Gewichtsverhältnis der Komponenten A) : B) beträgt 50:50 bis 95:5, vorzugsweise 70:30 bis 95:5.

Geeignete Sperrmittel C) sind Wachse und vorzugsweise Paraffine mit einem Schmelzpunkt zwischen 35 und 100°C, vorzugsweise 40 bis 80°C. Sie werden in Mengen von 0,01 bis 0,3 Gew.-%, vorzugsweise 0,02 bis 0,2 Gew.-%, bezogen auf das Gesamtgewicht der Komponenten A) bis D), eingesetzt.

Bei der Komponente D) handelt es sich um an sich bekannte Weichmacher, beispielsweise um Adipinsäureester wie z.B. ein Polykondensat aus 0,3 Mol Maleinsäu7reanhydrid, 0,7 Mol Adipinsäüure und 1,1 Mol Ethylenglykol oder bevorzugt um Carbamidsäureharze wie beispielsweise ®Resamin HF 450 (Carbamidsäureharz auf Basis Butylurethan und Formaldehyd der Fa. Hoechst).

Die Harze werden in Mengen von 0 bis 10 Gew.%, bezogen auf das Gesamtgewicht der Komponente A) bis D) eingesetzt. Erfindungsgemäße Beschichtungen ohne Komponente D) zeigen jedoch ein Alterungsverhalten, das sich in Form einer verschlechterten Polierbarkeit bei Lagerung der lackierten Flächen über mehrere Tage zeigt. Für andauernd gute Polierbarkeit der lackierten Flächen werden daher Mengen von 0,1 bis 10 Gew.-%, insbesondere aber 3 bis 7 Gew.-%, bezogen auf das Gesamtgewicht der Komponenten A) bis D) bevorzugt.

Die erfindungsgemäßen Lackkompositionen können mit Hilfs- und Zusatzmitteln E) der unterschiedlichsten Art abgemischt werden. Hierzu gehören Füllstoffe, Pigmente, Farbstoffe, Thixotropiermitel, Glättmittel, Mattierungsmittel oder Verlaufsmittel, die in den üblichen Mengen eingesetzt werden können.

Die Lackkompositionen können ohne zusätzliche copolymerisierbare Monomere oder Lösemittel zur Anwendung gelangen da es sich um niedrigviskose Produkte handelt. Es ist aber selbstverständlich möglich, in Fällen, in denen eine noch niedrigere Viskosität gewünscht wird, Monomere oder Lösemittel zuzugeben.

Die Aushärtung der erfindungsgemäßen Lackkompositionen erfolgt, gegebenenfalls nach Verdunsten von flüchtigen Hilfsmitteln wie inerte Lösungsmittel, entweder mittels energiereicher Strahlung, wie UV-Licht oder Elektronenstrahlen oder bevorzugt durch Härtung mittels Sikkativen in Kombination mit (Hydro-)Peroxiden bei Temperaturen zwischen Raumtemperatur und 80°C.

Unter Sikkativen werden Kobalt- und Mangansalze von Säuren -wie Leinölfettsäuren, Tallölfettsäuren, Sojaölfettsäuren - von Harzsäuren - wie Abietinsäuren und Naphthensäuren - von Essigsäure oder Isooctansäure verstanden. Bevorzugt werden Kobaltoctoat und Kobaltnaphthenat.

Vorzugsweise werden diese Sikkative in Form von organischen Lösungen in solchen Mengen eingesetzt, daß der Metallgehalt, bezogen auf ungesättigten Polyester, 0,005 bis 1 Gew.-% entspricht.

Als (Hydro-)Peroxide seien beispielhaft genannt: Dicumylperoxid, Di-tert.-butylperoxid, Benzoylperoxid, Cyclohexanonperoxid, Methylethylketonperoxid, Acetylacetonperoxid,Dinonylperoxid,Bis-(4-tert.-butylcyclohexyl)-peroxydicarbonat, tert.-Butylhydroperoxid, 2,5-Dimethylhexan-2,5-hydroperoxid und Diisopropyl-benzolmonohydroperoxid. Vorzugsweise werden dies (Hydro-)Peroxide in Mengen von 1 bis 10 Gew.-%, bezogen auf das Gewicht der ungesättigten Polyester eingesetzt.

Im Falle der Vernetzung mittels UV-Bestrahlung ist es notwendig, den Überzugsmassen Fotoinitiatoren hinzuzufügen.

Als Fotoinitiatoren sind die üblicherweise eingesetzten Verbindungen geeignet, wie sie z.B. in "Methoden der organischen Chemie" (Houben-Weyl), Band E20, Seite 80 ff, Georg Thieme Verlag, Stuttgart 1987, beschrieben sind.

Gut geeignet sind z.B. Benzoinether wie Benzoinisopropylether, Benzilketale, wie z.B. Benzildimethylketal und Hydroxyalkylphenone, wie z.B. 2-Hydroxy-2-methyl-1-phenyl-1-propan-1-on.

Die erwähnten Fotoinitiatoren werden in Mengen zwischen 0,1 bis 10 Gew.-%, bezogen auf das Gewicht der ungesättigten Polyester eingesetzt.

Die nachfolgenden Beispiele dienen der weiteren Erläuterung der Erfindung. Alle Prozentangaben beziehen sich auf Gewichtsprozente.

### Beispiele

### Ungesättigte Polyesterharze A

Die in der nachfolgenden Tabelle 1 aufgeführten Ausgangskomponenten werden zusammen mit 0,02 % Toluhydrochinon bei 160 bis 180°C unter einem Stickstoffstrom der Schmelzkondensation unterworfen, bis die angegebene Säurezahl und Viskosität erreicht ist.

**Tabelle 1**

| | erfindungsgemäße Polyester | | | | Vergleichspolyester | |
|---|---|---|---|---|---|---|
| | 1 | 2 | 3 | 4 | 5 | 6 |
| Ausgangskomponenten (Mol) | | | | | | |
| Fumarsäure | 1,0 | 1,0 | 1,0 | 1,0 | 0,7 | 1,0 |
| Tetrahydrophthalsäureanhydrid | - | - | - | - | 0,3 | - |
| Ethylenglykol | 0,6 | - | - | 0,6 | 0,6 | 0,6 |
| Propandiol-1,2 | - | 0,6 | 1,0 | - | - | - |
| Trimethylolpropandiallylether | 0,7 | 0,5 | 0,6 | 0,6 | 0,7 | 0,3 |
| Benzylalkohol | 0,3 | 0,5 | - | - | 0,3 | 0,7 |
| n-Hexan | - | - | - | 0,4 | - | - |

| Kenndaten des Polyesters | | | | | | |
|---|---|---|---|---|---|---|
| Säurezahl (mg KOH/Substanz) | 39 | 41 | 35 | 40 | 32 | 34 |
| Viskosität (mPa.s/23°C) | 3100 | 3000 | 3600 | 3100 | 3500 | 3800 |

Die Polyester wurden nach der in Tabelle 2 angegebenen Rezeptur zu Spritzlacken verarbeitet und in einem Arbeitsgang mit 300 g/m² auf Eiche-furnierte Spanplatten gespritzt.

Die Lacke der Beispiele 1 bis 4 waren nach 1 Stunde wischfest, die der Vergleichsbeispiele 5 bis 8 klebten noch.

Die 24 Stunden bei Raumtemperatur gelagerten Lackfilme der Beispiele 1 bis 4 waren sehr gut schleif- und polierbar. Die Polierbarkeit blieb auch nach mehreren Tagen Lagerung gleich gut.

**Tabelle 2**

| | Beispiele | | | | Vergleichsbeispiele | | | |
|---|---|---|---|---|---|---|---|---|
| | 1 | 2 | 3 | 4 | 5 | 6 | 7 | 8 |
| Lackzusammensetzung (Gew.-Teile) | | | | | | | | |
| Polyester 1 | 95 | | | | | | 95 | 95 |
| Polyester 2 | | 95 | | | | | | |
| Polyester 3 | | | 95 | | | | | |
| Polyester 4 | | | | 95 | | | | |
| Polyester 5 | | | | | 95 | | | |
| Polyester 6 | | | | | | 95 | | |
| 1,4-Butandioldimethacrylat | 14 | 14 | 14 | 14 | 14 | 14 | - | 14 |
| Weichharz (Resamin HF450*) | 5 | 5 | 5 | 5 | 5 | 5 | 5 | 5 |
| Ethylacetat | 7 | 7 | 7 | 7 | 7 | 7 | 21 | 7 |
| Byk-055** | 0,2 | 0,2 | 0,2 | 0,2 | 0,2 | 0,2 | 0,2 | 0,2 |
| Paraffin (Fp.51-53, 10 %ig in Toluol) | 0,3 | 0,3 | 0,3 | 0,3 | 0,3 | 0,3 | 0,3 | - |
| Kobaltoctoatlösung (2 % Metall) | 2 | 2 | 2 | 2 | 2 | 2 | 2 | 2 |
| Cyclohexanonperoxid (50 %ig in Weichm.) | 3 | 3 | 3 | 3 | 3 | 3 | 3 | 3 |

| | | | | | | | | |
|---|---|---|---|---|---|---|---|---|
| * Carbamidsäureharz auf Basis Butylurethan und Formaldehyd der Fa. Hoechst | | | | | | | | |
| ** Entschäumer der Fa. Byk-Chemie, Wesel | | | | | | | | |

### Erläuterung der Tabelle 2:

Vergleichsbeispiel 5 enthält einen Polyester, der mit einer nicht erfindungsgemäßen Menge an α,β-ethylenisch ungesättigte Dicarbonsäure hergestellt wird.
Vergleichsbeispiel 6 enthält einen Polyester, der mit einer nicht erfindungsgemäßen Menge an Allylether hergestellt wird.
Vergleichsbeispiel 7 enthält keine (Meth)Acryloylverbindung.
Vergleichsbeispiel 8 enthält kein Sperrmittel.

## Patentansprüche

1. Radikalisch bei Temperaturen unterhalb 80°C härtbare Lackkomposition aus
A) 50 bis 95 Gew.-Teilen einer α,β-ethylenisch ungesättigten Polyesterkomponente, einer Viskosität bei 23°C von 1000 bis 15000 mPa.s, bestehend aus mindestens einem Polyesterharz, welches unter Einhaltung eines Äquivalentverhältnisses von Carboxylgruppen zu Hydroxylgruppen von höchstens 1:1 durch Umsetzung von
a) einer Dicarbonsäurekomponente, bestehend zu 75 bis 100 Carboxyl-Äquivalent-% aus α,β-ethylenisch ungesättigten Dicarbonsäuren mit 4 oder 5 Kohlenstoffatomen und/oder deren Anhydriden und zu 0 bis 25 Carboxyl-Äquivalent-% aus anderen, dieser Definition nicht entsprechenden Dicarbonsäuren mit 4 bis 10 Kohlenstoffatomen oder deren Anhydriden, mit
b) einer Alkoholkomponente, bestehend zu 15 bis 60 Hydroxyl-Äquivalent-% aus mindestens einem β,γ-ethylenisch ungesättigten Alkenylether-Alkohol mit 6 bis 14 Kohlenstoffatomen und zu 40 bis 85 Hydroxyl-Äquivalent-% aus anderen, dieser Definition nicht entsprechenden ein- und/oder zweiwertigen Alkoholen des Molekulargewichtsbereichs 32 bis 400
hergestellt worden ist,
B) 5 bis 50 Gewichtsteilen (Meth)Acrylgruppen und/oder Vinylethergruppen enthaltender Verbindungen einer Viskosität bei 23°C von 10 bis 1000 mPa.s und des Molekulargewichtsbereichs 72 bis 1000,
wobei die Summe der Gewichtsteile A) und B) 100 beträgt,
C) 0,01 bis 0,3 Gew.-%, bezogen auf das Gesamtgewicht der Komponenten A) bis D), Wachse und/oder Paraffine mit einem Schmelzpunkt von 35 bis 100°C als Sperrmittel,
D) 0 bis 10 Gew.-%, bezogen auf das Gesamtgewicht der Komponenten A) bis D), mindestens eines Weichmacher- oder Carbamidsäureharzes,
sowie gegebenenfalls
E) aus der Technologie der ungesättigten Polyesterharze bekannten weiteren Hilfs- und Zusatzstoffen.

2. Lackkomposition gemäß Anspruch 1, dadurch gekennzeichnet, daß die Säurekomponente a) zu 75 bis 100 Carboxyl-Äquivalent-% aus Fumarsäure und die Alkoholkomponente b) zu 15 bis 60 Hydroxyl-Äquivalent-% aus Trimethylolpropandiallylether bestehen.

3. Lackkomposition gemäß Anspruch 1 und 2, dadurch gekennzeichnet, daß die Komponente D) in einer Menge von 0,1 bis 10 Gew.-%, bezogen auf das Gesamtgewicht der Komponenten A) bis D) vorliegt.

4. Verwendung der Lackkompositionen gemäß Anspruch 1 bis 3 als radikalisch härtbarer Möbellack.

## Claims

1. Lacquer composition, radically curable at temperatures below 80°C and composed of
A) from 50 to 95 parts by weight of an α,β-ethylenically unsaturated polyester component, having a viscosity at 23°C of 1000 to 15000 mPa.s, consisting of at least one polyester resin, which resin has been prepared by the reaction of
a) a dicarboxylic acid component consisting, to the extent of 75 to 100 carboxyl equivalents-%, of α,β-ethylenically unsaturated dicarboxylic acids having 4 or 5 carbon atoms and/or anhydrides thereof and, to the extent of 0 to 25 carboxyl equivalents-%, of other dicarboxylic acids not corresponding to this definition and having 4 to 10 carbon atoms or anhydrides thereof,
with
b) an alcohol component consisting, to the extent of 15 to 60 hydroxyl equivalents-%, of at least one β,γ-ethylenically unsaturated alkylene ether alcohol having 6 to 14 carbon atoms and, to the extent of 40 to 85 hydroxyl equivalents-%, of other monohydric and/or dihydric alcohols not corresponding to this definition and having molecular weights in the range of 32 to 400, an equivalent ratio of carboxyl groups to hydroxyl groups of at most 1:1 being maintained,
B) from 5 to 50 parts by weight of compounds containing (meth)acrylic groups and/or vinyl ether groups and having a viscosity at 23°C of 10 to 1000 mPa.s and having molecular weights in the range of 72 to 1000,
the sum of the parts by weight of A) and B) totalling 100,
C) from 0.01 to 0.3 wt.%, based on the total weight of components A) to D), of waxes and/or paraffins having a melting point of 35°C to 100°C as sealing agents,
D) from 0 to 10 wt.%, based on the total weight of components A) to D), of at least one plasticising resin or urea resin,
and optionally
E) other auxiliary substances and additives known from the technology of unsaturated polyester resins.

2. Lacquer composition according to claim 1, characterised in that the acid component a) consists to the extent of 75 to 100 carboxyl equivalents-% of fumaric acid and the alcohol component b) consists to the extent of 15 to 60 hydroxyl equivalents-% of trimethylolpropane diallyl ether.

3. Lacquer composition according to claims 1 and 2, characterised in that component D) is present in a quantity of from 0.1 to 10 wt.%, based on the total weight of components A) to D).

4. Use of the lacquer compositions according to claims 1 to 3 as radically curable furniture lacquer.

## Revendications

1. Composition de peinture apte au durcissement radicalaire à des températures inférieures à 80°C, composée de :
A) 50 à 95 parties en poids d'un composant polyester α,β-éthyléniquement insaturé, d'une viscosité à 23°C allant de 1000 à 15 000 mPa.s, constituée d'au moins une résine polyester, qui a été préparée, en respectant un rapport en équivalents des radicaux carboxyle aux radicaux hydroxyle d'au plus 1:1, par réaction de :
a) un composant diacide carboxylique, consistant en 75 à 100% en équivalents carboxyle de diacides carboxyliques α,β-éthyléniquement insaturés ayant 4 ou 5 atomes de carbone et/ou leurs anhydrides et en 0 à 25% en équivalents carboxyle d'autres diacides carboxyliques ne correspondant pas à cette définition, ayant 4 à 10 atomes de carbone ou leurs anhydrides, avec
b) un composant alcool, consistant en 15 à 60% en équivalents hydroxyle d'au moins un alcoylèneéther-alcool β,γ-éthyléniquement insaturé ayant 6 à 14 atomes de carbone et en 40 à 85% en équivalents hydroxyle d'un autre alcool mono- et/ou bivalent, ne correspondant pas à cette définition, de poids moléculaire compris dans l'intervalle allant de 32 à 400 ;
B) 5 à 50 parties en poids de composés contenant des radicaux (méth)acryliques et/ou des radicaux vinyléther, d'une viscosité à 23°C allant de 10 à 1000 mPa.s et de poids moléculaire compris dans l'intervalle allant de 72 à 1000,
où la somme des parties en poids A) et B) s'élève à 100 ;
C) 0,01 à 0,3% en poids, sur base du poids total des composants A) à D), de cire et/ou de paraffine avec un point de fusion allant de 35 à 100°C comme agent d'isolement ;
D) 0 à 10% en poids, sur base du poids total des composants A) à D), d'au moins une résine plastifiante ou carbamique, ainsi que facultativement,
E) d'autres auxiliaires et additifs connus dans la technologie des résines polyester insaturées.

2. Composition de peinture suivant la revendication 1, caractérisée en ce que le composant acide a) consistent en 75 à 100% en équivalents carboxyle d'acide fumarique et le composant alcool b), en 15 à 60% en équivalents hydroxyle de diallyléther de triméthylolpropane.

3. Composition de peinture suivant les revendications 1 et 2, caractérisée en ce que le composant D) est présent en une quantité allant de 0,1 à 10% en poids, sur base du poids total des composants A) à D).

4. Utilisation des compositions de peinture suivant les revendications 1 à 3, comme peinture pour meubles apte au durcissement radicalaire.
